# EUROPEAN PATENT APPLICATION

(11) **EP 3 782 847 A1**
(43) Date of publication of application: **24.02.2021**
(21) Application number: 19193472.8
(22) Date of filing: 23.08.2019
(51) Int. Cl.: B60L 53/16, B60L 53/35, H01R 13/62, H01R 24/38

(54) **AUTOMATIC COUPLER ASSEMBLY**

(71) Applicant: Prodrive Technologies B.V., 5692 EM Son (NL)
(72) Inventor: VAN DER KANT, Tom Adrianus Henricus, 5692 EM Son (NL); MEESSEN, Koen Joseph, 5692 EM Son (NL)
(74) Representative: Pronovem

(57) **Abstract**

Socket of an automatic coupler assembly arranged for receiving a plug along a first direction, comprising a first means for limiting the movement of the plug in the first direction and a second means for blocking the movement of the plug in a second direction opposite to the first direction.

## Description

### Technical field

The present invention relates to an automatic coupler assembly. More specifically the present invention relates to a socket or a plug for an automatic coupler assembly for charging the battery of an electric vehicle. The present invention further relates to a charging station or a vehicle. The present invention further relates to a vehicle or a charging station comprising parts of an automatic coupler assembly. The invention further relates to a method for automatically mating parts of an automatic coupler assembly.

### Background art

Charging of an electric vehicle (EV) such as a plug-in hybrid electric vehicle (PHEV) or a battery electric vehicle (BEV) is typically accomplished by a wired connection between a charging station and the vehicle. To this end, the electric vehicle comprises a socket that can be mated with a plug that is removably attached to the charging station. Nowadays, several types of sockets are readily available. However, the disadvantage of all of these regular sockets is they require manually mating the plug and socket.

Automated coupler systems are known, but they generally require complex positioning systems for mating the plug with the socket that is provided on the vehicle, for instance because it should accommodate mating sockets positioned differently (e.g. location, orientation) on different vehicles and/or vehicles positioned differently.

WO2016119000 discloses a system that requires a less complex positioning system because the socket is located on the underside of the vehicle and comprises vertically oriented concentric connectors. Such a coupler system allows a relatively simple movement of the plug in a vertical direction to mate the plug with the socket of various types of vehicles in a similar way once plug and socket are aligned, because the orientation of the underside of vehicles is normally parallel to the ground, while the concentric connectors provide an axisymmetric design that allows mating the plug and socket in various orientations. The disadvantages of this type of system are that it requires a significant externally applied force for mating plug and socket, and a constant holding force for maintaining a connection. Consequently, a complex compliance mechanism (e.g. suspension) is required for allowing unpredictable car movement during mating or when mated.

### Summary of the invention

It is an object of the invention to provide a plug and socket suitable for charging electric vehicles wherein the mating process can be performed in an automated manner, that is simpler, costs less, contains less elements and allows for easier compliance implementation. Preferably, embodiments according to the invention are suitable for charging electric vehicles with an alternating current of at least 10 ampere, for instance single phase power at 13 A, 16 A or 32 A respectively providing about 3 kW, 4 kW or 7 kW of power, or three phase power at 16 A, 32 A, 60 A per phase respectively providing about 11 kW, 22 kW or 43 kW. Alternatively, embodiments according to the invention are preferably suitable for charging electric vehicles with a direct current providing for instance between 50 kW and 350 kW (e.g. 120 kW). Embodiments according to the invention preferably solve one or preferably all of the disadvantages associated with solutions according to the prior art.

According to a first aspect of the invention the object is achieved by providing a socket according to the appended claims. Such a socket achieves the object of the invention, because for maintaining a connection a complex compliance mechanism to allow movement of the socket and a high holding force exerted on the plug is not required. The first means limit the movement of the plug in a first directions and the second means block the movement of the plug in the second direction opposite to the first direction, thus ensuring that the movement of the plug is restricted such that the connection is maintained, without requiring a complex compliance mechanism and applying an external holding force. Furthermore, a socket according to the invention enables the use of back-drivable drivetrains on the mover or robotic manipulator used for moving the plug, which is beneficial because back driveable axes can allow movement of the socket making the system compliant to movement of the car, without operating the drivetrains after plug and socket are mated.

Advantageously, at least a directional component of the first direction is upward, preferably the first direction is essentially upward. Such a socket arranged for receiving a plug that is moving upward can be attached to the underside of a vehicle. This has the benefit that it is typically essentially parallel to the ground, thereby simplifying mating a plug and socket and allowing for standardization.

The first means may be a physical limiter, which has the benefit that such a first means is robust. The physical limiter for instance is an abutting surface, which is preferably perpendicular to the first direction and may define a limiter plane extending orthogonally to the first direction. Such an abutting surface may be configured such that it functions as a means for aligning, for instance by centering and/or orienting, the plug for mating with the socket.

The second means preferably comprises a gripper configured for engaging the plug. Such a gripper comprises two engaging members moveable relative to one another in a third direction having at least a directional component perpendicular to the first direction. In an advantageous embodiment, at least one of the two engaging members is driven, for instance by a powered actuator such as a linear actuator, for moving the two engaging members relative to one another. In such an embodiment, the gripper can function in a fully automated manner and does not depend on a force applied externally, for instance on the plug. Preferably, at least one of the engaging members is movable relative to the physical limiter, for instance by sliding along the limiter plane. The benefit of such a gripper is that it does not extend along the first direction and therefore allows a low build height along the first direction. This greatly reduces any prejudices for attaching a socket to the underside of the vehicle, where there is limited space and ground clearance.

In an exemplary embodiment according to the invention at least one of the two engaging members comprises at least one electrical connector (e.g. being or comprising an electrical contact). Preferably, the at least one electrical connector is configured to be mated with a contra-connector of the plug when the two engaging members are moved towards one another along the third direction. This has the benefit that the socket provides an integral solution for mating and thus no external force (e.g. by a robot manipulator) needs to be applied for mating a plug with the socket.

Preferably, at least one of the engaging members is arranged for retaining the plug by blocking the movement of the plug in the second direction. In a beneficial embodiment, the at least one engaging member arranged for retaining the plug comprises at least one electrical connector. This ensures that the electrical connection is maintained in all situations as long as the plug is retained.

In a beneficial embodiment, the at least one electrical connector is configured to be mated with a contra-connector of the plug when the two engaging members are moved towards one another along the third direction. In such an embodiment, there is a closed force loop in the socket and the mating force does not need to be externally delivered to the plug by for instance a mover or a robot manipulator. An example of a suitable connector for such an embodiment is an elongate electrical connector that extends along the third direction. Such a connector preferably is a sliding connector, that is arranged to be slidably mated with a contra-connector, for instance a male or a female connector arranged on the plug. Providing such a socket on the underside of a vehicle, has the benefit that it provides a sliding connection in a direction essentially parallel to the ground and perpendicular to earth's gravitational force acting on the plug. Thereby maintaining the plug by blocking movement in the second direction essentially parallel to the earth's gravitational force.

In an embodiment according to the invention, the two engaging members and optionally the physical limiter define a cavity having a first state for receiving the plug, wherein the two engaging members are at a distant location with respect to one another, and a second state for blocking the movement of the plug in the second direction, wherein the two engaging members are at a proximal location with respect to one another, wherein in the distant location the two engaging members are located further apart from one another along the third direction than in the proximal location. Possibly, in the second state the two engaging members are configured for abutting opposing surfaces of the plug. In such an embodiment the various surfaces that are arranged for abutting the plug can work together for aligning (e.g. by means of translating, rotating) the contra-connectors of the plug with the connectors of the socket. To this end, preferably a surface of a first one of the two engaging members facing a second one of the two engaging members comprises a first geometry for complementing a second geometry of a reciprocal surface of the plug. Examples of such geometries are a convex, a concave, a tapered, a pawn like and a triangular shape.

According to a second aspect of the invention the object is achieved by providing a plug according to the appended claims. Such a plug achieves the object of the invention in the same way as the socket.

In an exemplary embodiment of the invention, wherein the first means is a physical limiter, such as an abutting surface, the plug comprises a first surface for abutting the abutting surface of the socket, wherein the first surface is configured for aligning the plug along a first plane, a second surface oriented substantially perpendicular to the first surface, comprising a first geometry for complementing a second geometry of a reciprocal surface of the socket configured to align the plug and socket for mating, and optionally at least one elongate contra-connector extending along the first plane. In a preferred embodiment, where the elongate contra-connector extends horizontally, the contra-connector is protected from dirt falling in.

Preferably the plug and/or socket comprises at least one electrical connector or contact. The at least one electrical connector advantageously comprises a plurality of electrical connectors or contacts arranged next to one another forming a plane, to minimize the build height of the socket, plug and/or charging station. For example, when these are used for charging electric vehicles a limited build height reduces the impact on the design of the vehicle for incorporating a socket. Furthermore, it eases installation of a charging station, since a low build height allows driving over such charging stations without requiring modifications of the mounting surface.

To this end the plug has an elongate shape. Even more preferably, the elongate shape extends along the first plane, when the plug is aligned along the first plane. Such an elongate shape has the benefit that the socket may also have a lower build height. When such a plug comprises multiple contra-connectors they may beneficially be arranged along the elongated shape. Preferably, the number and type of connectors is similar to regular manual plugs used for charging EV's. Typically, 7 contra-connectors are used providing protective earth, three phases, neutral potential and two data/communication-pins.

According to a third aspect of the invention the object is achieved by providing a charging station according to the appended claims. Such a charging station comprising a plug according to the invention achieves the object of the invention in a similar way as the plug.

Such a charging station may be equipped with a mover to move the plug between a first position more distant from a socket according to the invention than a second position, e.g. from the first position distant from the socket to the second position proximate to the socket towards, preferably at least along a first direction. Beneficially, the first direction is upward. Such a mover may also be arranged for moving the plug in a planar direction having at least a directional component perpendicular to the first direction.

In an exemplary embodiment the mover of a charging station according to the invention comprises a pivoting member (e.g. an arm) and a hinging member comprising a hinge, for instance a joint such as a spherical joint (e.g. a ball joint), wherein the hinging member is arranged for connecting the plug to the pivoting member and configured for providing angular freedom for orienting the plug with the socket.

The joint (e.g. ball joint) may allow an angle of rotation of the plug along all x, y, z axes. The axes may be defined as follows: the x-axis being along the pivoting member, the z-axis being along the first direction and the y-axis being perpendicular to the x-axis and the z-axis. Preferably, the plug has a neutral orientation on the pivoting member, for instance wherein an elongate contra connector extending along the first plane is runs essentially in parallel with the pivoting member. From the neutral orientation the plug and ball joint are arranged such to allow an angle of rotation between -45 degrees and 45 degrees around the x-axis, the y-axis and the z-axis. Preferably, the plug and ball joint are arranged such to allow an angle of rotation around the y-axis between -5 degrees and +30 degrees, an angle of rotation around the x-axis between -5 degrees and 5 degrees and an angle of rotation around the z-axis between -35 degrees and +35 degrees. Providing such degrees of freedom places less demanding requirements on the parking precision of a vehicle equipped with a socket, because it allows a relatively high degree of mismatch in plug and socket orientation.

The charging station may be arranged such that the plug, after being released from the socket, automatically returns to the neutral orientation. For instance, the charging station comprises a resilient member (e.g. a spring between the plug and the pivoting member) for biasing the plug towards the neutral orientation. The ball joint and plug may also be arranged such that the neutral orientation can be fixed, for instance by a snap-lock, such as a ball plunger in one part of the ball joint and a complementary recess in another part of the ball joint. Such a snap-lock may configured to be released by the first surface abutting the abutting surface.

The charging station may further comprise a base having a bottom surface for attaching the station to for instance a ground surface of a parking space. The mover may be a pivoting member attached to the base of the charging station via a ball joint or a hinge. Preferably, the attachment is arranged such that the pivoting member allows an angle of rotation with a plane defined by the bottom surface between 0 and 60 degrees, preferably between 0 and 25 degrees, even more preferably between 0 and 15 degrees. Such a range typically allows sufficient freedom of movement for mating the plug with sockets of various vehicles having different amounts of ground clearance. During mating, the pivoting member typically makes an angle between 5 and 20 degrees, preferably between 7 and 15 degrees. Optionally, the base plate is arranged such that in the first position (e.g. 0 degrees) it orients the plug towards the neutral orientation, which orientation may be fixed by the aforementioned snap-lock.

According to a fourth aspect of the invention the object is achieved by providing a vehicle according to the appended claims. Such a vehicle achieves the object of the invention in the same way as a socket according to the present invention.

Preferably, the vehicle comprises a socket arranged on the underside of the vehicle. This has the benefit that it is typically arranged essentially parallel to the ground, thereby simplifying mating a plug and socket and allowing for standardization.

According to a fifth aspect of the invention the object is achieved by providing a method according to the appended claims. Such a method for mating a plug and a socket achieves the object in the same way as the socket and the plug and comprises the steps of: moving a plug at least in a first direction towards the socket, limiting the movement of the plug in the first direction to a predetermined halting position, blocking the movement of the plug in a second direction opposite to the first direction upon reaching the predetermined halting position through engaging the plug by the socket. Preferably, at least a directional component of the first direction is upward.

Advantageously, the method comprises a step of aligning the plug along a plane substantially perpendicular to the first direction. This step may be incorporated in the step of limiting the movement of the plug in the first direction.

In a preferred embodiment, engaging the plug comprises clamping the plug between two engaging members of the socket. Advantageously, clamping the plug induces a movement of the plug along the plane thereby mating parts of the plug and the socket. Advantageously, in the step of engaging the plug, clamping the plug is preceded by aligning the plug. For instance, movement of the plug induced by engaging the plug may for example first align mating parts of the plug with mating parts of the socket, followed by mating part of the plug and the socket, which mating may establish an electrical connection between the plug and the socket.

### Brief description of the figures

Fig. 1 shows a side view of a socket and a plug according to an embodiment of the invention.
Fig. 2A, 2B, 2C, 2D shows steps of a method for mating a socket and plug according to an embodiment of the invention in consecutive order.
Fig. 3A shows an exploded view of a vertical mover of a charging station according to an embodiment of the invention equipped with a ball joint for connecting a plug to the vertical mover.
Fig. 3B shows a side view of a vertical mover of a charging station according to an embodiment of the invention equipped with a ball joint for connecting a plug to the vertical mover.

### Detailed description of embodiments

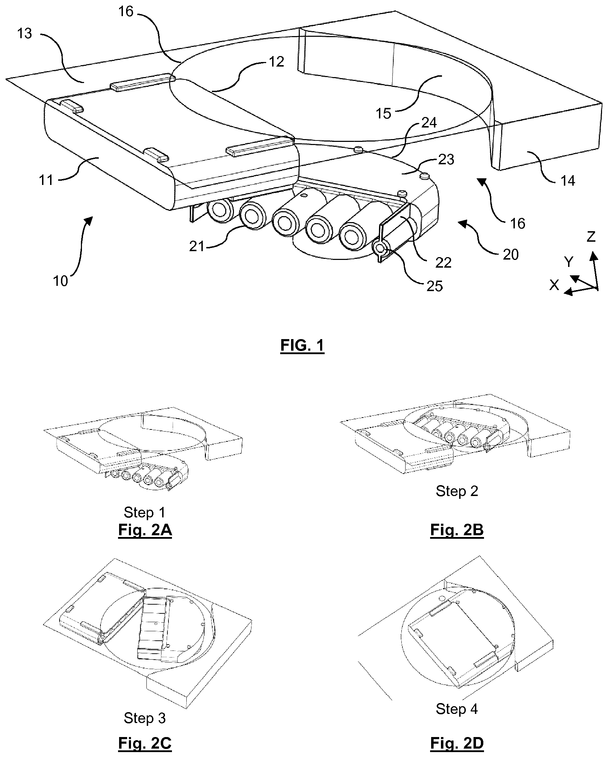

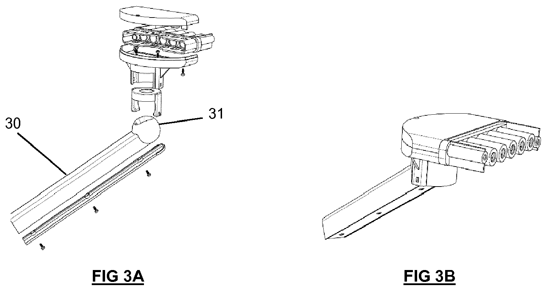

Referring to Fig. 1 and Fig. 3, the invention is related to an automatic coupler assembly such as a vehicle coupler for charging electric vehicles, comprising plug 20 and socket 10 provided as a vehicle unit that will self-align during mating while allowing for sufficient parking misalignment. The plug 20 is mounted to a ground unit (see Figs. 3A-B) comprising a mover 30 also referred to as a handler or manipulator, such as an off-board robot handler, advantageously through a hinge point (e.g. a spherical joint such as ball joint 31) providing the required (passive) degrees of freedom.

The mating direction of the vehicle coupler is advantageously in the horizontal plane (e.g. parallel to the x,y plane). The force required for mating is delivered by a (short) linear movement of at least one of the engaging members 11, 14 of the vehicle socket 10. Therefore, the off-board robot handler 30 can be limited to a low force handler (about 5N and less than 200N). Because of the low force design the handler will be fully backdrivable. This fully backdrivable robot handler does not require additional provisions to provide compliance when the car moves after mating.

The plug 20 itself comprises contra-connectors 21, potentially comprising three phase power contacts, a neutral potential contact, a protective earth contact and 2 communication contacts 25 (similar to the standard type 2 plug) and a plastic housing. It advantageously does not contain any moving parts or springs. This greatly improves the reliability and simplicity of the connector plug.

Referring to Fig. 1, the vehicle coupler can comprise one or a combination of the following elements:
- Plug 20 providing a connection device attached to a tip of an off-board robot 30, comprising electrical contra-connectors 21 arranged for engaging electrical connectors (not shown) provided in the socket 10.
- Vehicle socket engaging member 11 forming a receptacle for the plug 20 provided in socket 10 comprising connectors, which are electrically connected to the onboard charger.
- Landing plane 13 providing an abutting surface 16 as a physical limiter. This feature in the vehicle unit is capable of accepting the connector plug with an offset in the XY plane and forms the reference for parallel alignment of the first surface 23 of the connector plug with the abutting surface, e.g. providing a horizontal alignment.
- Vehicle socket engaging member 14 providing a catch plate, which is a feature in the vehicle unit that advantageously co-operates with the vehicle socket engaging member 11. Either one or both are shaped with a geometry 15 to align the plug 20 with the vehicle socket 10 in a horizontal plane (rotation and offset).
- Alignment features/ribs 12, 22 may be provided on the plug 20 as extending fins 22, preferably provided on the outer contra-connectors, and the vehicle socket engaging member 11 as a protruding edge. These geometrical features are configured to co-operate. Together these geometrical features make sure the contra-connector pins 21 (electrical connectors) will align with the connectors provided in the socket before mating, such as when the engaging member 11 abuts the plug 20 and moves towards the other engaging member 14.
- Cavity 16 for receiving the plug which may be provided by the two engaging members 11, 14 and the landing plane 13.
- Covers (not shown) for covering socket and/or plug during idle time.

Connector alignment principle by orienting and centering the plug 20 along the three axes:
Plug 20 is pushed against the connector landing plane 13 inside the bottom plate of the vehicle and orients the plug along the x,y plane. Vehicle socket engaging member 11 moves in -X towards engaging member 14 and pushes the plug 20 against a catch plate 15. The alignment features 12, 22 co-operate to orient the plug along the y,z plane. The centring geometries 15, 24 co-operate for center the plug by translation along the y axis.

The plug 20 advantageously comprises alignment features/ribs 22 to make sure the connector plug is rotated to the correct orientation to allow for mating.

The catch plate and plug advantageously comprise complementary circular geometries (e.g. convex, concave) to make sure that misalignment in XY and possibly orientation is corrected for when the vehicle socket is pushed to the connector plug. An alternative can be a triangular shape which exhibits similar behavior.

The lock between the vehicle unit 10 and the ground unit 20, 30 can be realized by means of features integrated in the vehicle socket and the connector plug.

The plug and the socket comprise one or more electrical connectors, such as pins 21 provided on the plug providing female contra-connectors and complementary male connectors (not shown) provided on the socket. These electrical connectors can be placed next to each other in the horizontal plane to reduce the height of the module for easier fitting in an electric vehicle.

The landing plane 13 is advantageously larger than the plug 20 to allow for misalignments in all directions.

The mating procedure can comprise one or a combination of the following steps, preferably in the following order (see Figs. 2A-D):
1. Car is parked above a ground unit comprising an off-board robot 30, preferably inside the parking range, e.g. using short range positioning as a car guidance system;
2. vehicle unit cover opens;
3. Ground unit cover opens;
4. Ground unit handler 30 moves the plug 20 along the z-axis inside the vehicle unit landing pad/cavity 16;
5. Vehicle unit detects the plug on the landing pad confirmation that the plug is present on the landing;
6. Ground unit provides small holding force along the z-axis and releases all other axes;
7. Vehicle unit engaging member 11 starts moving along the x-axis providing orientation, centering and mating;
8. Mating is completed, e.g. confirmed by a pilot pin;
9. Ground unit releases the z-axis providing compliance in 6 DOFs;
10. Charging starts.

## Claims

1. Socket (10) of or for an automatic coupler assembly in particular for charging electric vehicles arranged for receiving a plug (20) along a first direction, comprising a first means (13) for limiting the movement of the plug in the first direction and a second means (11, 14) for blocking the movement of the plug in a second direction opposite to the first direction.

2. Socket according to claim 1, wherein at least a directional component of the first direction is upward, preferably the first direction is essentially upward.

3. Socket according to claim 1 or 2, wherein the first means (13) is a physical limiter, such as an abutting surface, preferably the first direction is perpendicular to the abutting surface.

4. Socket according to any one of the preceding claims, wherein the second means comprises a gripper configured for engaging the plug, comprising two engaging members (11, 14) moveable relative to one another in a third direction having at least a directional component perpendicular to the first direction, preferably wherein at least one of the engaging members is movable relative to the physical limiter.

5. Socket according to claim 4, wherein at least one of the two engaging members comprises at least one electrical connector, preferably the at least one electrical connector is configured to be mated with a contra-connector (21) of the plug when the two engaging members are moved towards one another along the third direction.

6. Socket according to any one of claims 4 to 5, wherein at least one of the two engaging members is arranged for retaining the plug by blocking the movement of the plug in the second direction, preferably the at least one engaging member arranged for retaining the plug comprises the at least one electrical connector.

7. Socket according to claim 6, wherein the at least one electrical connector is an elongate electrical connector extending along the third direction.

8. Socket according to any one of claims 4 to 7, wherein the two engaging members and optionally the physical limiter define a cavity (16) having a first state for receiving the plug, wherein the two engaging members are at a distant location with respect to one another, and a second state for blocking the movement of the plug in the second direction, wherein the two engaging members are at a proximal location with respect to one another.

9. Socket according to claim 8, wherein in the second state the two engaging members are configured for abutting opposing surfaces of the plug.

10. Socket according to any one of claims 4 to 9, wherein a surface (15) of a first one of the two engaging members facing a second one of the two engaging members comprises a first geometry for complementing a second geometry of a reciprocal surface (24) of the plug.

11. Plug (20) for an automatic coupler assembly for co-operation with the socket of any of the preceding claims, comprising a first surface (23) for abutting the abutting surface of the socket according to claim 3 and any claim dependent thereon wherein the first surface is configured for aligning the plug along a first plane, a second surface (24) oriented substantially perpendicular to the first surface, comprising a first geometry for complementing a second geometry of a reciprocal surface (15) of the socket configured to align the plug and socket for mating, and optionally at least one elongate contra-connector (21, 25) extending along the first plane.

12. Charging station comprising a plug of claim 11, a mover (30) and a hinging member such as a ball joint (31), wherein the is arranged for connecting the plug (20) to the mover, wherein the mover is configured to move the plug between a first position more distant from the socket (10) than a second position.

13. Vehicle comprising a socket of any one of the claims 1 to 10, wherein the socket (10) is arranged on the underside of the vehicle.

14. Method for mating a plug (20) and a socket (10), comprising the steps of:
• Moving a plug at least in a first direction towards the socket
• Limiting the movement of the plug in the first direction to a predetermined halting position
• Blocking the movement of the plug in a second direction opposite to the first direction upon reaching the predetermined halting position through engaging the plug by the socket.

15. Method according to claim 14, wherein engaging the plug comprises clamping the plug between two engaging members (11, 14) of the socket, wherein the clamping induces a movement of the plug along the plane thereby mating parts of the plug and the socket, and wherein the induced movement of the plug aligns mating parts of the plug with mating parts of the socket and establishes an electrical connection between the plug and the socket.
